Europäisches Patentamt

European Patent Office

Office européen des brevets

(11) Veröffentlichungsnummer: **0 479 039 A1**

# (12) EUROPÄISCHE PATENTANMELDUNG

(21) Anmeldenummer: **91115797.2**

(51) Int. Cl.5: **B65H 23/02**

(22) Anmeldetag: **18.09.91**

(30) Priorität: **01.10.90 DE 4031026**

(43) Veröffentlichungstag der Anmeldung:
**08.04.92 Patentblatt 92/15**

(84) Benannte Vertragsstaaten:
**CH DE FR GB LI**

(71) Anmelder: **Agfa-Gevaert AG**

**W-5090 Leverkusen 1(DE)**

(72) Erfinder: **Payrhammer, Bernd, Dipl.-Ing.**
**Schumannstrasse 14**
**W-8000 München 80(DE)**
Erfinder: **Schlechte, Manfred, Dipl.-Ing.**
**Buchendorfer Strasse 38**
**W-8027 Neuried(DE)**
Erfinder: **Benker, Gerhard, Dipl.-Ing.**
**Haydnstrasse 1**
**W-8023 Pullach(DE)**

(54) **Führungs- und Transporteinrichtung für bandförmiges Material.**

(57) Die Erfindung betrifft eine Führungs- und Transporteinrichtung für bandförmiges Material, insbesondere für das Einziehen und Auswerfen belichteter und entwickelter Filmstreifen in einer Kopiervorrichtung, mit einem eine seitliche Führung bildenden Element und einem Antriebsrollenpaar. Das Antriebsrollenpaar (25, 26) weist eine kegel- oder kegelstumpfförmige Rolle (25) auf, die so gelagert ist, daß bei ihrer Rotation ihre das Band berührende Mantellinie parallel zu dem bandförmigen Material (1) liegt und ihre Achse senkrecht zur Transportrichtung des bandförmigen Materials ausgerichtet ist. Außerdem ist ein auf das nachlaufende Filmstück eine Seitenkraft ausübendes Element (23) vorgesehen.

Fig. 3

EP 0 479 039 A1

Die Erfindung geht aus von einer Einrichtung nach dem Oberbegriff des Hauptanspruchs.

In vielen Fotolabors werden an den Filmstreifen, die der Kunde zurück erhält, sog. Tabberstreifen angebracht, um Nachbestellungen durch den Kunden zu erleichtern. Auf diesen Tabberstreifen kann der Kunde die gewünschten Bilder ankreuzen und die Anzahl der benötigten Kopien notieren. Auch für die Bedienperson des Kopiergerätes im Fotolabor bedeutet es eine große Erleichterung, wenn der Auftrag direkt am Bild ablesbar ist. Nachteilig ist, daß von den verschiedenen Fotolabors Tabberstreifen mit unterschiedlicher Breite verwendet werden. Dies bedeutet, daß die Vorlagenbühne für den Filmstreifen entweder in ihrer Breite verstellbar sein muß oder daß Vorlagenbühnen mit verschieden breiten Führungsbahnen austauschbar vorrätig sein müssen.

Aus der DE-PS 26 19 374 ist eine Transport- und Führungseinrichtung für Filmstreifen für einen Kerbautomaten bekannt geworden. In dieser Einrichtung wird ein herkömmliches Transportrollenpaar verwendet, welches jedoch leicht schräg zur Transportrichtung des Filmes angestellt ist. Der Film wird dadurch nicht ausschließlich in Transportrichtung, sondern auch mit seiner einen Seitenkante gegen eine Seitenführung, die in dem gezeigten Ausführungsbeispiel aus einer Rolle besteht, gelenkt. Da der Film immer in Anlage an diese Führungsrolle gehalten wird, kann eine weitere Führung an der anderen Seitenkante des Films entfallen, und es ist daher möglich, mit derselben Vorrichtung Filme unterschiedlicher Breite zu verarbeiten. Soll die Transportrichtung des Filmstreifens umgekehrt werden, muß aber ebenfalls die Anstellrichtung des Transportrollenpaares geändert werden, da der Filmstreifen sonst nicht mehr in Anlage an die Führungsrolle gehalten würde, sondern von dieser wegbewegt werden würde.

Der Erfindung liegt die Aufgabe zugrunde, eine Führungs- und Transporteinrichtung so auszubilden, daß bandförmiges Material unterschiedlicher Breite - insbesondere Filmstreifen mit daran angebrachten Tabberstreifen - in zwei entgegengesetzte Richtungen ohne weitere Umstellung gefördert werden kann.

Die Aufgabe wird gelöst durch die im kennzeichnenden Teil des Hauptanspruchs beschriebenen Merkmale. Durch die spezielle Formgebung und Lagerung der einen Rolle des Antriebsrollenpaares wird das bandförmige Material, ähnlich wie bei der aus dem Stand der Technik bekannten Anordnung, nicht nur in Transportrichtung, sondern auch mit einer geringen Komponente in Seitenrichtung zu der Seite der Kegelrolle mit dem größten Durchmesser hin beaufschlagt. Das bedeutet, daß das bandförmige Material immer in Anlage an eine Gleitschiene oder Führungsrolle transportiert wird, wenn die kegel- oder kegelstumpfförmige Rolle so eingebaut ist, daß die Seite, die den größeren Durchmesser aufweist, gegen den Führungsanschlag gewandt ist. Es besteht die Möglichkeit, beide Rollen des Antriebsrollenpaares kegel- oder kegelstumpfförmig auszubilden, in vorteilhafter Weise ist jedoch nur die Gegendruckrolle in dieser Art geformt, während die Antriebsrolle in üblicher Weise zylinderförmig ausgebildet ist. An der geraden Achse der zylinderförmigen Rolle läßt sich einfacher der Anschluß an einen Antrieb realisieren als an der geneigten Achse der kegelstumpfförmigen Rolle. Für den Transport von belichteten und entwickelten Filmstreifen hat es sich herausgestellt, daß die seitlich wirkende Kraftkomponente ausreicht, wenn die Grund- und Mantelfläche der Rolle einen Winkel einschließen, der größer als 65°, aber kleiner als 30° ist. Der verwendete Winkel ist abhängig von der Andruckkraft des Rollenpaares und muß ebenso dem Material der Rollen sowie dem zu führenden Band angepaßt werden. Bei kleinerem Winkel kann die Seitenkraft jedoch zu groß werden, so daß es u. U. zu einer Querwölbung des Filmes kommen kann.

Um die empfindliche Beschichtung des Filmes nicht zu beschädigen, ist das Antriebsrollenpaar mit einem weichen elastischen Material ummantelt. Es besteht ebenfalls die Möglichkeit, das Antriebsrollenpaar so zu positionieren, daß es nur auf den Randbereich des Filmes und nicht auf die eigentliche Bildfläche einwirkt.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird. Es zeigen:

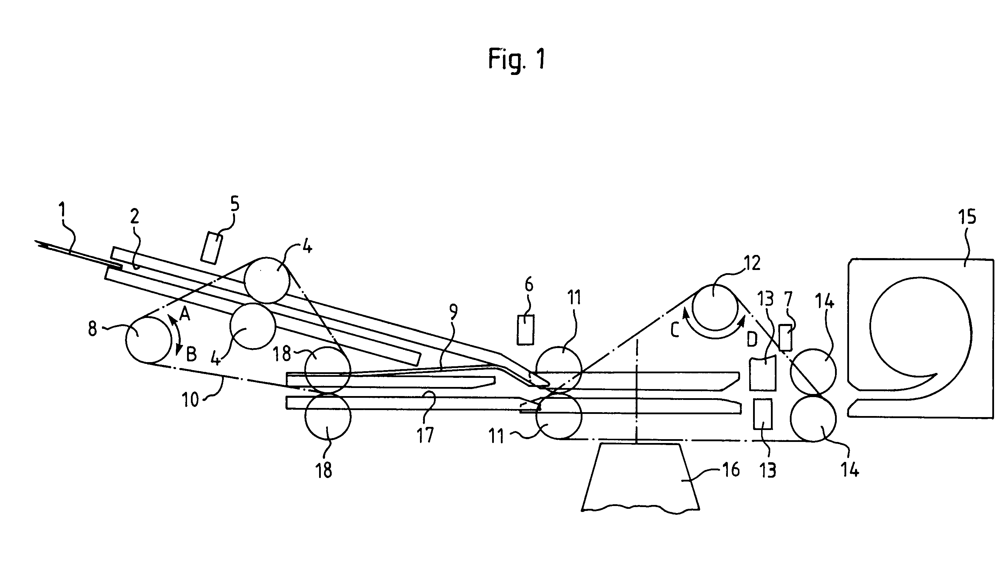

Fig. 1      eine schematisierte Darstellung einer Vorlagenbühne für die Behandlung von Nachbestellungsaufträgen,

Fig. 2      die Aufsicht auf den unteren Teil einer erfindungsgemäßen Führungs- und Transporteinrichtung und

Fig. 3      einen Schnitt entlang der Linie III-III in Fig. 2.

Um Nachbestellaufträge bearbeiten zu können, wird der mit einem Tabberstreifen versehene Filmabschnitt 1 von der Bedienungsperson in den Einführschacht 2 der Vorlagenbühne eingeschoben. Kurz vor dem ersten Antriebsrollenpaar 4 befindet sich ein Signalgeber 5. Hierbei kann es sich in beliebiger Weise um einen Mikroschalter oder etwa eine Lichtschranke handeln. Durch den Signalgeber wird das Vorhandensein des Filmstreifens festgestellt und ein entsprechendes Signal an eine nicht dargestellte Steuereinheit gegeben. Liegt kein entsprechendes Signal von den Gebern 6 und 7 vor, so läuft der Antriebsmotor 8 in Richtung des Pfeiles A an. Der Geber 7 kann auch eingespart werden und das Signal direkt vom Scanner 13 abgenommen werden. Über den Riemen 10 wird das Antriebsrollenpaar 4 angetrieben, welches den Filmstreifen 1 sodann einzieht. Die Feder 9 ist so weich ausgelegt, daß sie von dem auftreffenden Filmstreifen nach unten gedrückt werden kann und somit den Film zu dem zweiten Antriebsrollenpaar 11 leitet. Sobald der Filmstreifen von dem Signalgeber 6 detektiert wird, läuft der Antriebsmotor 12 in Richtung des Pfeiles C an. Der Filmstreifen wird nun durch die Scan-Station 13 transportiert, in der die Transparenzwerte gemessen werden. Über das Transportrollenpaar 14 wird der Filmstreifen dann in den Speicher 15 geschoben. Sobald von dem Signalgeber 7 das Filmende festgestellt wird, schaltet der Motor 12 um und läuft in Richtung des Pfeiles D an. Der Film wird nun wieder aus dem Speicher 15 gezogen und über die Kopierstation 16 transportiert. Mit Hilfe der in der Scan-Station 13 ermittelten Positions- und Transparenzdaten werden hier die vom Kunden gewünschten Abzüge belichtet. Durch die Feder 9, die wie eine Weiche wirkt, ist für den Filmstreifen der Weg in den Einführschacht 2 versperrt und er wird durch das Antriebsrollenpaar 11 in den Auswurfschacht 17 geschoben. Wenn von dem Signalgeber 6 der Film erkannt wird, läuft der Motor 8 in Richtung des Pfeiles B an.

Der Film wird vom Antriebsrollenpaar 18 erfaßt und ausgeworfen. Um das Antriebsrollenpaar 4 während der Auswurfphase nicht bereits in Betrieb zu setzen, ist bei einer Betriebsart des Motors 8 in Richtung des Pfeiles B ein Freilauf vorgesehen. Wird nun von dem Signalgeber 6 das Ende des auszuwerfenden Filmstreifens festgestellt, so schaltet nach einer vorherbestimmten Umdrehungszahl, die ausreicht, um den Filmstreifen ganz aus dem Auswurfschacht 17 zu befördern, der Motor 8 wieder um in Laufrichtung des Pfeiles A, so daß der nächste Filmstreifen eingezogen werden kann. Für den Fall, daß der bearbeitete Filmstreifen nach dem Auswerfen so zu liegen kommt, daß er von dem Antriebsrollenpaar 18 wieder ergriffen werden könnte, ist hier ebenfalls ein Freilauf vorgesehen, der entgegengesetzt zum Freilauf des Antriebsrollenpaares 4 in Drehrichtung des Pfeiles A des Motors 8 wirkt. Da die Schaltung des Antriebs 8 nicht nur von dem Signalgeber 5, sondern auch von den beiden Signalgebern 6 und 7 abhängig ist, ist gewährleistet, daß der neue Filmstreifen immer erst dann eingezogen wird, wenn der vorhergehende Filmstreifen fertig bearbeitet und durch den Auswurfschacht 17 wieder ausgestoßen wurde. Dadurch besteht für die Bedienperson die Möglichkeit, sobald ein Filmstreifen eingezogen wurde, bereits den nächsten in den Einführschacht 2 einzulegen, ohne daß er von dem Antriebswalzenpaar 4 sogleich erfaßt werden würde. In der Zeit, während der erste Filmstreifen durch die Scan-Station 13 in den Speicher 15 transportiert wird und während bei dem Zurücktransport über die Kopierstation 16 die gewünschten Abzüge gefertigt werden, kann die Bedienperson bereits die Daten für den nächsten Filmstreifen - wie z. B. Anzahl der Abzüge und evtl. Farbkorrekturwerte - in das Gerät eingeben. Gegenüber Vorrichtungen, bei denen der Filmstreifen über denselben Führungsschacht eingezogen und wieder ausgestoßen wird, bedeutet dies eine erhebliche Zeiteinsparung.

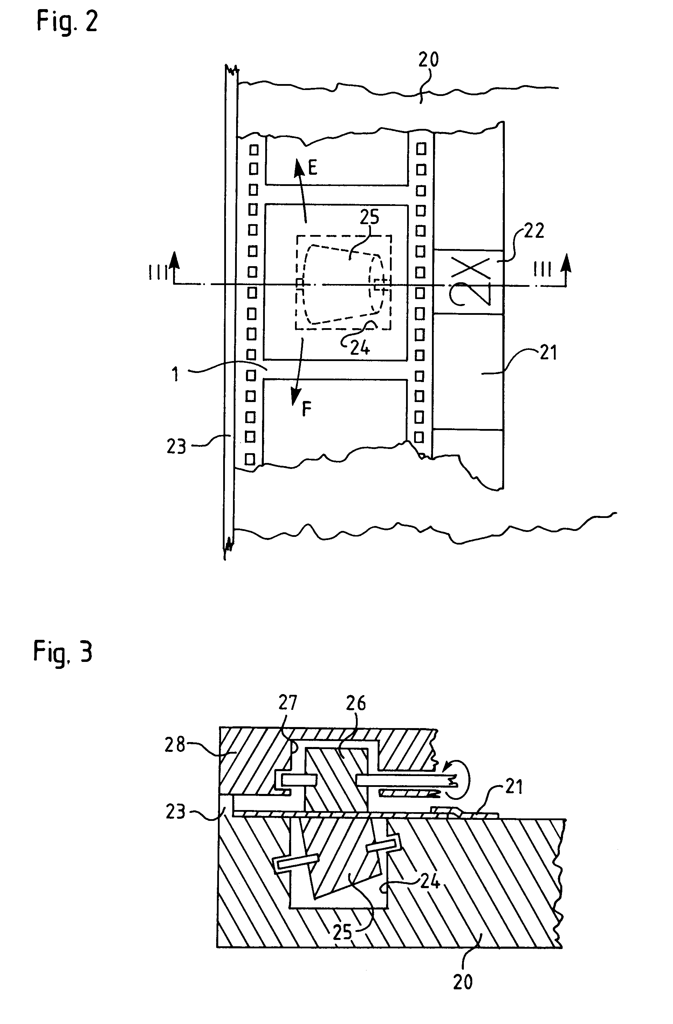

Die Ausbildung der Antriebsrollenpaare 4, 11 und 14 ist in den Fig. 2 und 3 näher beschrieben. Der Film 1 mit dem damit verbundenen Tabberstreifen 21 liegt auf der Unterlage 20 auf. Als Seitenführung dient die einstückig mit der Unterlage 20 ausgebildete Gleitschiene 23. Auf dem Tabberstreifen 21, dessen Breite keine Rolle spielt, sind Felder 22 vorgesehen, auf denen der Kunde vermerken kann, welche Bilder er in welcher Anzahl wünscht. In dem Unterteil 20 ist eine Ausnehmung 24 vorgesehen, in der eine kegelstumpfförmige Rolle 25 gelagert ist. Die Rolle 25 ist so eingebaut, daß der Film 1 plan auf ihrer Mantelfläche aufliegt. Die Rolle 25 muß nicht durchgehend konisch geformt sein, sondern kann auch durch zwei unterschiedlich große Reibräder gebildet werden, die mit einem bestimmten Abstand auf einer Achse befestigt sind. Als Antriebsrolle dient die zylindrische Rolle 26. Sie ist in einer Ausnehmung 27 des Oberteils 28 gelagert. Der Film 1 sollte zwischen den beiden Rollen 25 und 26 in etwa immer mit gleicher Kraft beaufschlagt werden. Dies kann entweder durch eine elastische Verbindung zwischen dem Oberteil 28 und dem Unterteil 23 oder durch eine Anfederung einer der beiden Rollen 25, 26 realisiert werden.

Durch die Form und Lagerung der Rolle 25 ist der Film 1 bestrebt, abhängig von der Umdrehungsrichtung des Antriebsrollenpaares sich entweder in Richtung des Pfeiles E oder aber in Richtung des Pfeiles F zu bewegen. Beide Pfeile haben eine Komponente in Richtung der Gleitschiene 23. Dies bedeutet, daß der Film 1 immer bestrebt ist, sich in Anlage an der als Führung dienenden Gleitschiene 23 zu halten, unabhängig davon, ob er nun vorwärts oder rückwärts transportiert wird.

Um die beschriebene Wirkung zu erreichen, könnten auch zwei kegelstumpfförmige Rollen verwendet werden, wobei die Seiten mit dem größeren Durchmesser sich gegenüber liegen. In diesem Fall müßte jedoch auch die Antriebswalze schräg gelagert sein, was zu einem konstruktiven Mehraufwand führen würde.

**Patentansprüche**

**1.** Führungs- und Transporteinrichtung für bandförmiges Material, insbesondere für das Einziehen und Auswerfen belichteter und entwickelter Filmstreifen in der Kopiervorrichtung, mit einem eine seitliche Führung bildenden Element und einem Antriebsrollenpaar, dadurch gekennzeichnet, daß das Antriebsrollenpaar (25, 26) eine kegel- oder kegelstumpfförmige Rolle (25) aufweist, die so gelagert ist, daß bei ihrer Rotation ihre das Band berührende Mantellinie parallel zu dem bandförmigen Material (1) liegt und ihre Achse senkrecht zur Transportrichtung des bandförmigen Materials ausgerichtet ist und daß ein auf das nachlaufende Filmstück eine Seitenkraft ausübendes Element (23) vorgesehen ist.

2. Führungs- und Transporteinrichtung nach Anspruch 1, dadurch gekennzeichnet, daß die zweite Rolle (26) des Antriebsrollenpaares (25, 26) zylinderförmig ist.

3. Führungs- und Transporteinrichtung nach Anspruch 2, dadurch gekennzeichnet, daß die zylinderförmige Rolle (26) angetrieben ist und die kegel- oder kegelstumpfförmige-Rolle (25) als Gegendruckrolle fungiert.

4. Führungs- und Transporteinrichtung nach Anspruch 1, dadurch gekennzeichnet, daß die Grundfläche und die Mantelfläche der kegel- oder kegelstumpfförmigen Rolle (25) einen Winkel einschließen, der größer als 65° und kleiner als 90° ist.

5. Führungs- und Transporteinrichtung nach Anspruch 1, dadurch gekennzeichnet, daß das auf das nachlaufende Filmstück eine Seitenkraft ausübende Element durch eine Gleitschiene (23) gebildet wird.

6. Führungs- und Transporteinrichtung nach einem der Ansprüche 1 bis 4, dadurch gekennzeichnet, daß das Antriebsrollenpaar (25, 26) auf den Randbereich des bandförmigen Materials (1) wirkt.

Fig. 1

Fig. 2

20

E

25

III

2X

22

24

1

21

F

23

Fig. 3

27    26

28

23

21

25

24

20

# EUROPÄISCHER RECHERCHENBERICHT

**EP 91 11 5797**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 048 322   (BERTHOLD & GÜTTINGER AG)<br>* Zusammenfassung; Ansprüche 1,3,5-7,10; Abbildungen * *<br>— — — | 1-6 | B 65 H 23/02 |
| A | EP-A-0 318 764   (BORTELLI A.)<br>* Zusammenfassung; Abbildungen 1-3 * *<br>— — — — — | 1 | |

**RECHERCHIERTE SACHGEBIETE (Int. Cl.5)**

B 65 H

Der vorliegende Recherchenbericht wurde für alle Patentansprüche erstellt

| Recherchenort | Abschlußdatum der Recherche | Prüfer |
|---|---|---|
| Den Haag | 21 Januar 92 | THIBAUT E.E.G.C. |